# EUROPÄISCHE PATENTSCHRIFT

(11) **EP 0 226 812 B1**
(45) Veröffentlichungstag und Bekanntmachung des Hinweises auf die Patenterteilung: **27.01.1993**
(21) Anmeldenummer: 86115899.6
(22) Anmeldetag: 15.11.1986
(51) Int. Cl.: G08B 13/24

(54) **Deaktivierbares Sicherungsetikett für Diebstahlsicherungssysteme**
Security label for theft security system capable of deactivation
Etiquette désactivalbe de sécurité pour système de sécurité anti-vol

(30) Priorität: 21.12.1985 DE 3545647
(43) Veröffentlichungstag der Anmeldung: 01.07.1987
(73) Patentinhaber: Vacuumschmelze GmbH, 63450 Hanau (DE)
(72) Erfinder: Hilzinger, Hans-Reiner, Dr., D-6456 Langeselbold (DE); Reinhard, Paul, D-6454 Bruchköbel (DE); Dinter, Reiner, Dipl.-Phys., D-6454 Bruchköbel (DE)

(56) Entgegenhaltungen:
- EP-A- 0 078 401
- WO-A-85/02285
- DE-A- 2 931 932
- DE-A- 3 015 811
- US-A- 3 983 552

## Beschreibung

Die Erfindung betrifft ein deaktivierbares Sicherungsetikett für Diebstahlsicherungssysteme nach dem Oberbegriff des Anspruchs 1.

Aus der US-A 3 820 104 ist ein Sicherungsetikett bekannt, bei dem ein schmaler, weichmagnetischer Streifen in der Nähe eines wesentlich breiteren Streifens aus einem magnetischen Material mit höherer Koerzitivfeldstärke angeordnet ist. Wenn diese Anordnung in eine Zone mit einem magnetischen Wechselfeld gebracht wird, so ändert der weichmagnetische Streifen dieses Wechselfeld und induziert in einer vom Wechselfeld beeinflußten Spule Spannungsoberwellen. Diese Spannungsoberwellen lassen sich zur Auslösung eines Alarms auswerten.

Will man dieses bekannte Sicherungsetikett deaktivieren, so kann man den breiteren magnetischen Streifen mit höherer Koerzitivfeldstärke in Längsrichtung magnetisieren.

Durch in Abständen in diesen Streifen eingestanzte Öffnungen wird ein Streufluß erzeugt, der den weichmagnetischen Streifen abschnittsweise in einander entgegengesetzter Richtung aufmagnetisiert. In diesem Zustand ist der weichmagnetische Streifen weitgehend gesättigt, so daß er keine bzw. andere und wesentlich geringere Oberwellen erzeugt, wenn er in das Wechselfeld gebracht wird. Der Streifen ist also deaktiviert und löst keinen Alarm aus.

Aus WO 85/02285 ist ein Sicherungsetikett für Diebstahlsicherungssysteme bestehend aus zwei nahe beieinander angeordneten aus ferromagnetischem Material bestehenden Streifen unterschiedlicher Koerzitivfeldstärke bekannt. Zur Deaktivierung des Sicherungsetiketts wird der Streifen höherer Koerzitivfeldstärke durch Dauermagnete so aufmagnetisiert, daß das sich einstellende Streufeld den Streifen aus weichmagnetischem Material abschnittsweise in einander entgegengesetzten Richtungen durchsetzt.

Andere bekannte Anordnungen besitzen eine ähnliche Wirkungsweise. In der US-A 3 747 086 besteht das Sicherungsetikett aus zwei oder mehreren beieinander angeordneten Streifen mit unterschiedlichen Koerzitivfeldstärken. Zur Deaktivierung dieses Etiketts besitzt einer der Streifen einen ausreichenden Querschnitt, um den weichmagnetischen Streifen zu sättigen, so daß durch das magnetische Wechselfeld keine Ummagnetisierung des Streifens erfolgt.

Bei einer weiteren bekannten Anordnung, wie sie in der DE-A 34 19 785 beschrieben ist, verwendet man als weichmagnetisches Material ein amorphes Band, das mit kurzen Streifen eines hartmagnetischen Materials, die im Abstand zueinander angeordnet sind, verbunden ist. Auch hier erzeugt die Magnetisierung dieser hartmagnetischen Streifen unterschiedlich vormagnetisierte Abschnitte im weichmagnetischen Band, so daß durch das weichmagnetische Material keine Oberwellen mehr erzeugt werden, die zur Auslösung eines Alarms führen.

In der US-A 3 983 552 wird ein Diebstahlsicherungssystem beschrieben, bei dem das Sicherungsetikett aus zwei ferromagnetischen Streifen unterschiedlich hoher Koerzitivfeldstärke besteht, wobei im aktiven Zustand der Streifen höherer Koerzitivfeldstärke aufmagnetisiert ist und zur Deaktivierung entmagnetisiert wird. Die beiden Streifen können fest miteinander verbunden sein. Als Materialien für den Streifen höherer Koerzitivfeldstärke werden Kobalt-Eisen-Vanadium-Legierungen offenbart.

Aufgabe der vorliegenden Erfindung ist es, ein deaktivierbares Sicherungsetikett vorzusehen, das mit möglichst wenig Anteil an magnetischem Material mit höherer Koerzitivfeldstärke auskommt und leicht aktiviert und deaktiviert werden kann. Außerdem besteht das Sicherungsetikett aus einem einzigen Stück und kann deshalb in Bandform auf eine Rolle gewickelt vorliegen, von der Etiketten entsprechend der gewünschten Länge abgeschnitten und mit den zu schützenden Waren verbunden werden können.

Diese Aufgabe wird bei einem gattungsgemäßen Sicherungsetikett durch die kennzeichnenden Merkmale des Anspruchs 1 gelöst.

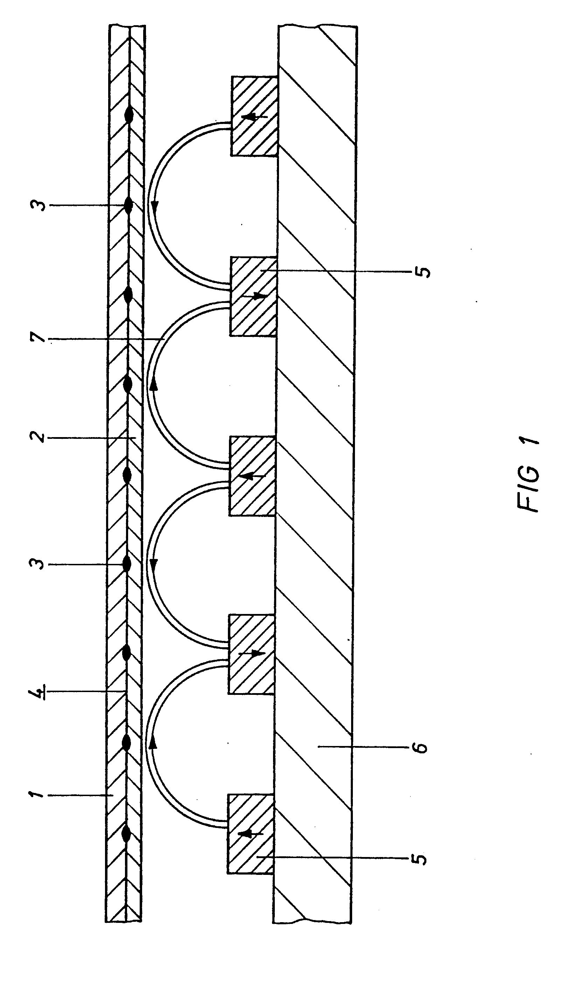

Ein Ausführungsbeispiel für ein erfindungsgemäßes, deaktivierbares Sicherungsetikett mit zugehöriger Deaktivierungseinrichtung ist in Fig. 1 schematisch dargestellt.

Das Sicherungsetikett besteht aus einem Streifen 1 aus weichmagnetischem Material mit hoher Permeabilität und niedriger Koerzitivfeldstärke sowie aus einem Streifen 2 aus einer magnetisch halbharten Kobalt, Nickel und Eisen enthaltenden Legierung. Die Streifen 1 und 2 sind durch eine Schweißnaht oder durch Schweißpunkte 3, z. B. mit Hilfe eines Widerstandspunktschweißverfahrens, fest miteinander verbunden, so daß das Sicherungsetikett 4 von einem aufgerollten Band stückweise abgeschnitten werden kann. Die Schweißpunkte 3 verbinden die Streifen 1 und 2 so fest, daß die auftretenden Scherkräfte bei Biegung des Sicherungsetiketts aufgenommen werden können.

Vorteilhafterweise besitzen die Schweißpunkte voneinander einen Abstand zwischen 10 und 50 mm. Es sind allerdings auch andere Fälle denkbar, bei denen ein Abstand von 3 mm erforderlich ist oder bei denen der Abstand zweier benachbarter Schweißpunkte 3 bis zu 500 mm betragen kann.

Zur Deaktivierung sind Dauermagnete 5, beispielsweise aus CoSm, auf einer als magnetischer Rückschluß wirkenden Platte 6 so aufgebracht, daß benachbarte Magnete 5 zueinander entgegengesetzte Magnetisierungsrichtungen aufweisen. Die Magnetisierungsrichtung der Magnete 5 ist durch Pfeile angedeutet, die Linien 7 deuten einige der von den Magneten erzeugten Streufeldlinien an.

Das verwendete Material für die Streifen 2 mit höherer Koerzitivfeldstärke bietet für das erfindungsgemäße Sicherungsetikett wegen der geringen Koerzitivfeldstärke und der gleichzeitig recht hohen Remanenz den Vorteil, daß ein relativ geringer Querschnitt (verglichen mit dem Querschnitt des weichmagnetischen Streifens 1) vorgesehen werden kann und daß zum Deaktivieren handelsübliche Dauermagnete verwendet werden können, da relativ niedrige Magnetfelder ausreichen, um das Material der Streifen 2, umzumagnetisieren. Dies gilt vor allem auch, da das gewählte Material eine wesentlich rechteckigere Magnetisierungsschleife besitzt als beispielsweise andere Magnetwerkstoffe, so daß die Magnetisierungsfeldstärke nicht wesentlich größer als die Koerzitivfeldstärke gewählt werden muß, um die maximal mögliche Remanenz zu erreichen.

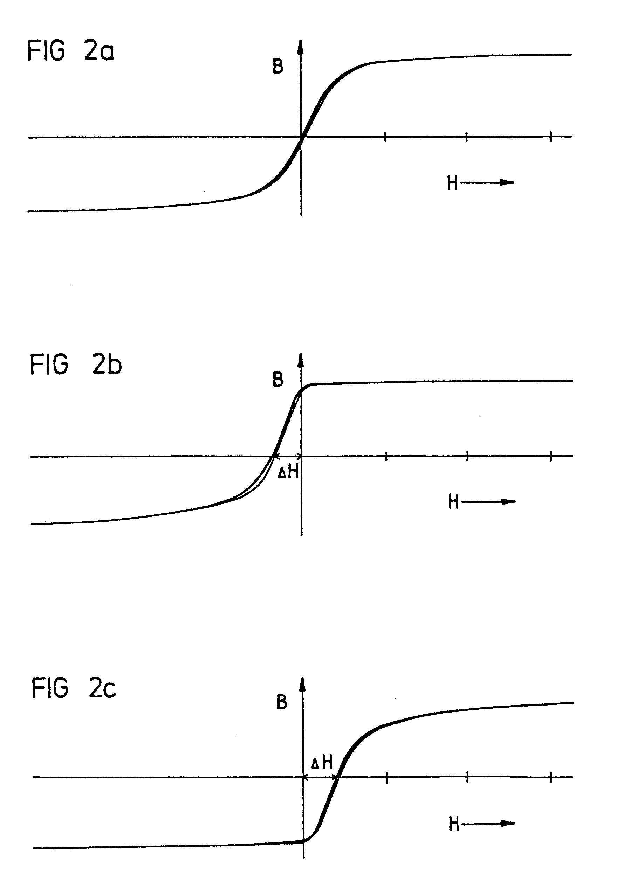

Wird der Streifen nicht in der in Figur 1 gezeigten Richtung in die Nähe der Dauermagnete 5 gebracht, sondern beispielsweise senkrecht dazu an einem der Dauermagnete 5 vorbeigeführt, so entsteht eine gleichmäßige Aufmagnetisierung des Streifens 2, die im magnetischen Wechselfeld lediglich eine zeitliche Verschiebung der erzielten Oberwellen, nicht aber eine Änderung der Intensität dieser Oberwellen zur Folge hat. Deshalb kann man dieses Verfahren zum Wiederaktivieren des Streifens benutzen, ohne daß eine Entmagnetisierungseinrichtung erforderlich ist. Dies ist beispielsweise aus den Diagrammen in den Figuren 2a bis 2c zu ersehen.

Figur 2a zeigt die Hysteresekurve des erfindungsgemäßen Sicherungsetiketts für den Fall, daß der Streifen 2 weitgehend entmagnetisiert ist. Nimmt man an, daß die Feldstärke eines den Streifen beeinflussenden Wechselfeldes zwischen +3 A/cm und -3 A/cm schwankt, so wird im Bereich der Feldstärke Null der Streifen 1 ummagnetisiert, was Spannungsimpulse ergibt, die Ursache für die Erzeugung einer den Alarm auslösenden Oberwellen sind.

Ist der Sicherungsstreifen in der einen oder anderen Richtung aufmagnetisiert, so ergeben sich die Verhältnisse, wie sie in den Figuren 2b und 2c dargestellt sind. Man erkennt, daß sich der Bereich der Ummagnetisierung nach negativen bzw. positiven Werten verschiebt. Dies zeigt, daß auch bei aufmagnetisiertem Streifen 2 eine Ummagnetisierung des Streifens 1 erfolgt, wobei die im magnetischen Wechselfeld auftretenden Spannungsimpulse lediglich zeitlich verschoben sind. Wird das Sicherungsetikett 4 entsprechend der Anordnung nach Figur 1 deaktiviert, so entstehen in dem Streifen 2 Bereiche mit unterschiedlichen Magnetisierungsrichtungen, die ein wesentlich höheres Streufeld zur Folge haben, als wenn der gesamte Streifen 2 in einer Richtung magnetisiert ist. Dies hat zur Folge, daß der Streifen 1 bei dem gleichen Feldeinfluß wie in Figur 2 nicht mehr in ganzer Länge ummagnetisiert wird.

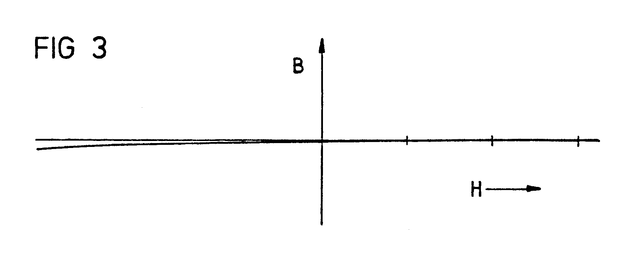

Dies ist in Figur 3 dargestellt. Es zeigt sich, daß sich die Induktion bei einer Feldänderung von +3 A/cm nach -3 A/cm kaum noch ändert. Die im Wechselfeld induzierte Oberwellenspannung wird drastisch vermindert. Ein Alarm wird nicht mehr ausgelöst.

Versuche haben ergeben, daß folgende Legierungen als magnetisches Material für den Streifen 2 mit höherer Koerzitivfeldstärke in Verbindung mit einem Streifen aus amorphem Material geeignet sind:
12,0 % Eisen, 3,1 % Niob, 0,50 % Mangan, 0,20 % Silizium, Rest Kobalt.
58,1 % Kobalt, 10,0 % Nickel, 2,2 % Aluminium, 2,1 % Titan, Rest Eisen.
55,1 % Kobalt, 11,5 % Nickel, 3,0 % Titan, 1,2 % Aluminium, Rest Eisen.

Beispielsweise werden ein bis fünf Streifen der letztgenannten Legierung mit der Abmessung 0,5 mm Breite und 0,05 mm Dicke auf ein amorphes Band einer Kobaltbasislegierung mit einer Breite von 2,5 mm und einer Dicke von 0,025 mm aufgeklebt. Schon bei Verwendung von 2 Streifen (effektiver Gesamtquerschnitt 1,0 x 0,05 mm) war eine Deaktivierung möglich; bei Verwendung von CoSm-Magneten und einem Abstand zwischen Sicherungsetikett 4 und Dauermagneten 5 von 5 mm und 8 mm.

Weiterhin wurde das genannte, hartmagnetische Material auf die Abmessung 2,5 x 0,033 mm gewalzt und durch Wärmebehandlung bei einem ersten Versuch eine Koerzitivfeldstärke von 46 A/cm und einem zweiten Versuch eine Koerzitivfeldstärke von 20 A/cm eingestellt. Je 10 Meter wurden mit einem amorphen, weichmagnetischen Band durch Punktschweißen zusammengeschweißt. Bei dem Band mit 46 A/cm Koerzitivfeldstärke läßt sich eine Deaktivierung bis zu einem Abstand von 5 mm zum Dauermagneten 5 und bei der Probe mit einer Koerzitivfeldstärke von 20 A/cm läßt sich eine Deaktivierung bis zu einem Abstand von 9 mm vornehmen.

Als Streifenlänge wurden bei den Versuchen 75 mm und 90 mm gewählt und hierbei eine ausreichende Ansprechsicherheit der Alarmanlage festgestellt. Die Dauermagnete 5 besitzen vorteilhafterweise einen Abstand von etwa 5 mm bis 6 mm voneinander. Dieser Abstand wurde bei einer Deaktivierung des Sicherungsetiketts 4 im Abstand von 5 mm bis 8 mm als vorteilhaft erkannt.

Das Sicherungsetikett muß nicht unbedingt parallel zu der Reihe der Dauermagnete orientiert sein. Eine Schrägorientierung ist auch möglich. Hierdurch ergibt sich lediglich eine geringfügige Änderung der Magnetisierungsverteilung. Eine sichere Deaktivierung war bis zu einer Schrägorientierung von etwa 70° gegenüber der in Figur 1 dargestellten Parallellage möglich.

Als besonders vorteilhaft hat es sich erwiesen, wenn die Streifen 1 und 2 nicht miteinander verklebt, sondern durch Punktschweißen miteinander verbunden wurden. Das durch Punktschweißen hergestellte Sicherungsetikett war bei einem Abstand der Schweißpunkte von 10 mm gut biegbar, so daß im Normalfall größere Schweißpunktabstände bis zu 50 mm ebenfalls gute Ergebnisse erwarten lassen.

## Patentansprüche

1. Deaktivierbares Sicherungsetikett für Diebstahlsicherungssysteme, bei denen ein weichmagnetischer Streifen ein in einer Prüfzone erzeugtes magnetisches Wechselfeld verändern und damit einen Alarm auslösen kann, bestehend aus mindestens zwei nahe beieinander angeordneten, aus ferromagnetischem Material bestehenden Streifen (1, 2), von denen mindestens einer aus weichmagnetischem Material mit hoher Permeabilität und niedriger Koerzitivfeldstärke besteht, während mindestens ein weiterer Streifen (2) eine höhere Koerzitivfeldstärke aufweist und zur Deaktivierung des Sicherungsetiketts durch Dauermagnete (5) so aufmagnetisierbar ist, daß das sich einstellende Streufeld den Streifen (1) aus weichmagnetischem Material abschnittsweise in einander entgegengesetzte Richtungen durchsetzt, **dadurch gekennzeichnet**, daß die das Sicherungsetikett bildenden Streifen (1, 2) fest miteinander zu einem Laminat verbunden sind und daß der Streifen (2) mit höherer Koerzitivfeldstärke aus einer Legierung mit 9 bis 15 Gew.-% Nickel, mehr als 50 Gew.-% Kobalt, Rest Eisen besteht, die bis zu 4 % Zusätze von Aluminium, Titan und Niob enthalten kann und deren Koerzitivfeldstärke im Bereich zwischen 20 und 50 A/cm liegt, bei einer Remanenzinduktion von mehr als 1 Tesla, und daß das Sicherungsetikett zur Deaktivierung durch eine Reihe unterschiedlich gepolter Magnete (5) abschnittsweise entgegengesetzt aufmagnetisierbar ist.

2. Deaktivierbares Sicherungsetikett nach Anspruch 1, **dadurch gekennzeichnet,** daß der Streifen (2) mit höherer Koerzitivfeldstärke aus einer Legierung mit 9 bis 12 Gew.-% Nickel, 54 bis 59 Gew.-% Kobalt, Rest Eisen und bis zu 3 Gew.-% Zusätze aus Aluminium und Titan besteht.

3. Deaktivierbares Sicherungsetikett nach Anspruch 1, **dadurch gekennzeichnet**, daß der weichmagnetische Streifen (1) aus einem amorph gegossenen Material besteht und an dem Streifen (2) mit höherer Koerzitivfeldstärke durch Punktschweißen befestigt ist.

4. Deaktivierbares Sicherungsetikett nach Anspruch 3, **dadurch gekennzeichnet**, daß der Abstand der Schweißpunkte (3) zwischen 3 mm und 500 mm beträgt.

5. Deaktivierbares Sicherungsetikett nach Anspruch 4, **dadurch gekennzeichnet**, daß der Abstand der Schweißpunkte (3) voneinander 10 mm bis 50 mm beträgt.

6. Deaktivierbares Sicherungsetikett nach Anspruch 1, **dadurch gekennzeichnet**, daß der weichmagnetische Streifen an dem Streifen mit höherer Koerzitivfeldstärke durch Nahtschweißen befestigt ist.

7. Deaktivierbares Sicherungsetikett nach Anspruch 1, **dadurch gekennzeichnet**, daß durch Wärmebehandlung der Legierung eine Koerzitivfeldstärke zwischen 20 und 50 A/cm bei einer Remanenz von mehr als 1,2 Tesla eingestellt ist.

8. Verwendung eines Sicherungsetiketts nach einem der Ansprüche 1 bis 7 in einem Diebstahlsicherungssystem, bei dem der weichmagnetische Streifen ein in einer Prüfzone erzeugtes magnetisches Wechselfeld verändern und damit einen Alarm auslösen kann und bei dem die Deaktivierung des Sicherungsetiketts durch eine Reihe unterschiedlich gepolter Dauermagnete erfolgt.

## Claims

1. A deactivatable security label for theft security systems, wherein a soft magnetic strip can change a magnetic alternating field generated in a test zone and can thus trigger an alarm, comprising at least two strips (1, 2) which are arranged one beside another and are composed of ferromagnetic material, and of which at least one consists of soft magnetic material with a high permeability and a low coercive force, whilst at least one further strip (2) possesses a higher coercive force and, for the deactivation of the security label, can be magnetised by permanent magnets (5) in such manner that the stray field which is produced permeates the strip (1) of soft magnetic material in sections in opposing directions, characterised in that the strips (1, 2) which form the security label are permanently connected to one another to form a laminate, and that the strip (2) with the higher coercive force consists of an alloy which comprises 9 to 15 % by weight nickel, more than 50 % by weight cobalt and the remainder iron and which can contain up to 4 % additions of aluminium, titanium and niobium and the coercive force of which ranges between 20 and 50 A/cm, with a remanence induction of more than 1 tesla, and that for its deactivation the security label can be magnetised in sections in opposing fashion by a row of differently polarised magnets (5).

2. A deactivatable security label as claimed in Claim 1, characterised in that the strip (2) with the higher coercive force consists of an alloy comprising 9 to 12 % by weight nickel, 54 to 59% by weight cobalt, the remainder iron and up to 3 % by weight additions of aluminium and titanium.

3. A deactivatable security label as claimed in Claim 1, characterised in that the soft magnetic strip (1) consists of an amorphously cast material and is attached to the strip (2) with the higher coercive force by spot welding.

4. A deactivatable security label as claimed in Claim 3, characterised in that the interval between the weld points (3) amounts to between 3 mm and 500 mm.

5. A deactivatable security label as claimed in Claim 4, characterised in that the interval between the weld points (3) amounts to 10 mm to 50 mm.

6. A deactivatable security label as claimed in Claim 1, characterised in that the soft magnetic strip is attached to the strip with the higher coercive force by seam welding.

7. A deactivatable security label as claimed in Claim 1, characterised in that by thermal treatment of the alloy a coercive force of between 20 and 50 A/cm is set, with a remanence of more than 1.2 tesla.

8. The use of a security label as claimed in one of Claims 1 to 7 in a theft security system, wherein the soft magnetic strip can change a magnetic alternating field generated in a test zone and can thus trigger an alarm, and wherein the deactivation of the security label is carried out by a row of differently polarised permanent magnets.

## Revendications

1. Etiquette de sécurité pouvant être désactivée pour systèmes de sécurité antivol, dans lesquels une bande magnétique douce peut modifier un champ magnétique alterné produit dans une zone d'essai et peut de cette façon déclencher une alarme, consistant en au moins deux bandes (1, 2) disposées côte à côte, réalisées en matière ferromagnétique, dont au moins l'une est en une matière magnétique douce à haute perméabilité et avec une intensité de champ coercitif basse, tandis qu'au moins une autre bande (2) présente une intensité de champ coercitif plus élevée et pour la désactivation de l'étiquette de sécurité est magnétisée par des aimants permanents (5), de telle sorte que le champ de dispersion qui s'établit traverse la bande (1) en matière magnétique douce par sections dans des sens opposés les uns aux autres, étiquette de sécurité caractérisée en ce que les bandes (1, 2) formant l'étiquette de sécurité sont fermement reliées l'une à l'autre pour former un stratifié et la bande (2) avec une intensité de champ coercitif plus élevée consiste en un alliage avec 9 à 15 % en poids de nickel, plus de 50 % en poids de cobalt, le reste étant du fer, alliage qui peut contenir jusqu'à 4 %· d'addition d'aluminium, titane et nobium et dont l'intensité du champ coercitif se trouve dans la zone comprise entre 20 et 50 A/cm, dans le cas d'une induction rémanente supérieure à 1 Telsa et en ce que l'étiquette de sécurité pour être désactivée peut être magnétisée par une série d'aimants différemment polarisés (5) par sections de façon opposée.

2. Etiquette de sécurité pouvant être désactivée selon la revendication 1, caractérisée en ce que la bande (2) avec une intensité de champ coercitif plus élevée consiste en un alliage avec 9 à 12 % en poids de nickel, 54 à 59 % en poids de cobalt, le reste étant du fer et jusqu'à 3 % en poids d'additifs consistant en aluminium et en titane.

3. Etiquette de sécurité pouvant être désactivée selon la revendication 1, caractérisée en ce que la bande magnétique douce (1) consiste en une matière coulée amorphe et est fixée à la bande (2) à intensité de champ coercitif plus élevée par soudure par points.

4. Etiquette de sécurité pouvant être désactivée selon la revendication 3, caractérisée en ce que l'intervalle entre les points de soudure (3) est compris entre 3 mm et 500 mm.

5. Etiquette de sécurité pouvant être désactivée selon la revendication 4, caractérisée en ce que l'intervalle entre les points de soudure (3) va de 10 à 50 mm.

6. Etiquette de sécurité pouvant être désactivée selon la revendication 1, caractérisée en ce que la bande magnétique douce est fixée à la bande magnétique à intensité de champ coercitif plus élevée par un cordon de soudure.

7. Etiquette de sécurité pouvant être désactivée selon la revendication 1, caractérisée en ce qu'il s'établit par traitement thermique de l'alliage une intensité de champ coercitif comprise entre 20 et 50 A/cm dans le cas d'une rémanence supérieure à 1,2 Tesla.

8. Utilisation d'une étiquette de sécurité selon l'une des revendications 1 à 7 dans le système de sécurité antivol, dans lequel la bande magnétique douce peut modifier un champ magnétique alternatif produit dans une zone d'essai et de cette façon peut déclencher une alarme et dans lequel la désactivation de l'étiquette de sécurité est obtenue au moyen d'une série d'aimants permanents polarisés différemment.
